# EUROPÄISCHE PATENTSCHRIFT

(11) **EP 0 693 419 B1**
(45) Veröffentlichungstag und Bekanntmachung des Hinweises auf die Patenterteilung: **19.11.1997**
(21) Anmeldenummer: 95105271.1
(22) Anmeldetag: 07.04.1995
(51) Int. Cl.: B62M 11/16, B62L 5/16, F16H 3/66

(54) **Mehrgang-Antriebsnabe mit mehr als 3 Gängen für ein Fahrrad**
Multi-speed hub transmission for a bicycle with more than three speeds
Transmission de bicyclette à plusieurs vitesses avec plus de trois vitesses

(30) Priorität: 23.07.1994 DE 4426239
(43) Veröffentlichungstag der Anmeldung: 24.01.1996
(60) Teilanmeldung: 96118842.2
(73) Patentinhaber: FICHTEL & SACHS AG, D-97424 Schweinfurt (DE)
(72) Erfinder: Bergles, Eduard, Ing., A-8041 Graz (AT)

(56) Entgegenhaltungen:
- EP-A- 0 383 350
- EP-A- 0 531 608
- EP-A- 0 549 570
- GB-A- 2 014 260
- GB-A- 2 251 276
- US-A- 3 934 493
- US-A- 5 064 035

## Beschreibung

Die Erfindung betrifft eine Mehrgang-Antriebsnabe mit mehr als drei Gängen für ein Fahrrad gemäß dem Oberbegriff des Anspruchs 1.

Aus der DE-A-34 40 071 ist eine mit einer integrierten Rücktrittbremseinrichtung versehene Fünfgang-Antriebsnabe für ein Fahrrad bekannt. Die Antriebsnabe umfaßt eine auf einer Nabenachse drehbar gelagerte Nabenhülse, die von einem relativ zur Nabenachse und der Nabenhülse drehbar auf der Nabenachse gelagerten Antreiber über ein mehrstufiges Planetengetriebe antreibbar ist. Das Planetengetriebe ist insgesamt in der Nabenhülse untergebracht und hat als Stufenräder ausgebildete Planetenräder, deren Stufen über eine manuell bedienbare Steuereinrichtung wechselweise mit zwei Sonnenrädern kuppelbar sind, die ihrerseits wechselweise an der Nabenachse drehfest festgesetzt werden können.

Eine ausgeführte Nabe gemäß DE 39 30 374 A1 war bisher durch das Zentrum der Nabenachse nur mit mindestens zwei Schubklötzen schaltbar, die voneinander unabhängig zu betätigen waren, wobei es schwierig war, Klinkengesperre als Kupplungen unterzubringen.

Steuereinrichtungen nach der DE 24 58 871 A1 oder DE 41 42 867 A1, die mit um die Nabenachse drehbaren Steuerrohren arbeiten, sind bisher nur durch aufwendiges Einleiten der Steuerbewegung zwischen Antreiber und Nabenachse realisierbar gewesen.

Es ist die Aufgabe der Erfindung, eine Mehrgang-Antriebsnabe mit mehr als drei Gängen zu schaffen, bei welcher Steuerbewegungen von außen einfach auf das in der Nabe angeordnete Getriebe übertragen werden können.

Diese Aufgabe wird durch die im Anspruch 1 angegebenen Merkmale gelöst.

In einer Schaltnabe sind zwei Planetengetriebe vorgesehen, deren erstes einstufig ausgeführt ist und als Vorgelege zu einem zweiten dient, das zweistufig ausgeführt ist und mit welchem in Verbindung mit einem Direktgang fünf Gangstufen darstellbar sind. Eine Zahnradstange gibt in der vorliegenden Erfindung über Zahnräder, die in der Nabenachse fixiert sind, die Steuerbewegung über das Steuerrohr an die Planetengetriebe weiter. Es ist lediglich ein Drehglied an einen Ende der Nabenachse erforderlich, um alle Gangstufen zu schalten.

Die Erfindung wird nachstehend anhand eines Ausführungsbeispiels mit einer Zeichnung einer Zahngang-Antriebsnabe mit integrierter Rücktrittbremseinrichtung für Fahrräder erläutert. Es zeigen:
- Fig. 1: eine Ausführungsform einer Zahngang-Antriebsnabe mit Rücktrittbremse in der Fahrstellung des ersten Ganges im Längsschnitt;
- Fig. 2: eine Abwicklung von Steuerkurven und ihre Zuordnung zu den einzelnen Gangstufen;

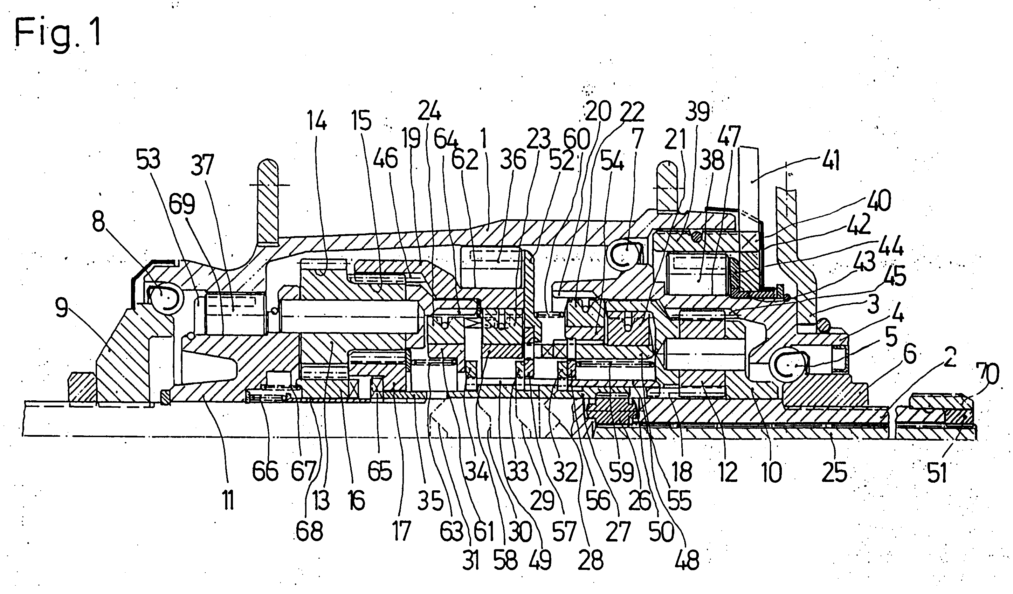

In dem in Fig. 1 dargestellten Ausführungsbeispiel einer erfindungsgemäßen Zehngang-Antriebsnabe mit integrierter Rücktrittbremseinrichtung ist mit 1 eine Nabenhülse mit Speichenflanschen bezeichnet, die relativ zu einer Nabenachse 2 drehbar gelagert ist und von einem seinerseits relativ zur Nabenachse 2 und zur Nabenhülse 1 drehbaren Antreiber 4 über eine aus zwei Planetengetriebestufen bestehendem Planetengetriebeanordnung antreibbar ist. Der Antrieb des Antreibers 4 erfolgt über ein Antriebsritzel 3, welches mit diesem axial-und drehfest verbunden ist. Der Antreiber 4 stützt sich über ein erstes Lager 5 auf einem Festkonus 6 ab, der mit der Nabenachse 2 fest verbunden ist. Ein zweites Lager 7 stellt die verbindung zur Nabenhülse 1 her, welche wiederum über ein drittes Lager 8 und einen Stellkonus 9 mit der Nabenachse 2 drehend verbunden ist. Das erste Planetengetriebe besteht aus den Antreiber 4 mit einer Innenverzahnung 45 als Hohlrad, mindestens einem Planetenrad 12, einem ersten Planetenradträger 10 sowie einer Sonnenradverzahnung 18, die mit der Nabenachse 2 fest verbunden ist. Der erste Planetenradträger 10 ist mit einer Hülse 55 über ein erstes Klinkengesperre 21 verbunden; ein zweites Klinkengesperre 22 verbindet schaltbar den Antreiber 4 ebenfalls mit der Hülse 55, wobei das zweite Klinkengesperre 22 auf einen ersten Ring 54 angeordnet ist, der über eine erste Schaltscheibe 56 axial verschoben werden kann, bis die Klinken in eine Klinkenverzahnung 20 einrasten können. Der erste Ring 54 ist mit der Hülse 55 drehfest aber axial verschiebbar verbunden, wobei eine erste Feder 59 die erste Schaltscheibe 56 gegen eine erste Steuerscheibe 32 drückt. Die erste Steuerscheibe 32 wird in einen Schlitz 49 einer Führungshülse 48 axial geführt, wobei die Führungshülse 48 mit der Sonnenradverzahnung 18 permanent im Eingriff steht und sich also nicht verdrehen kann. In dem Schlitz 49 ist eine zweite Steuerscheibe 33 und eine dritte Steuerscheibe 34 angeordnet, die ebenfalls die Führungshülse 48 durchgreifen und somit axial verschiebbar jedoch nicht verdrehbar angeordnet sind. An der zweiten Steuerscheibe 33 liegt eine zweite Schaltscheibe 57 an, welche mit einem ersten Rollenkäfig 52 in Kontakt steht, der an die zweite Schaltscheibe 57 durch die Kraft einer zweiten Feder 60 gegen die zweite Schaltscheibe 57 gedrückt wird.

Ein drittes Klinkengesperre 23, welches auf einen zweiten Ring 58 angeordnet ist, befindet sich im ständigen Eingriff mit einem Hohlrad 19, das mit einer Hohlradverzahnung 46 mit einen kleinen Stufenrad 15 im Dauereingriff steht und zum zweiten Planetengetriebe gehört, welches ferner aus mindestens einem Doppelplanetenrad 13 mit einem großen Stufenrad 14 und eben dem kleinen Stufenrad 15 sowie aus einen kleinen Sonnenrad 16 und einen großen Sonnenrad 17 besteht. Das Doppelplanetenrad 13 ist auf einem zweiten Planetenradträger 11 angeordnet, der auf der Nabenachse 2 drehbar jedoch nicht axial verschiebbar angeordnet ist. Soll der Planetenradträger 11 angetrieben werden, so erfolgt der Kraftverlauf über einen dritten Ring 61 über ein viertes Klinkengesperre 24 über eine Verzahnung 64 zum zweiten Planetenradträger 11. Es handelt sich bei dem vierten Klinkengesperre 24 um ein steuerbares Klinkengesperre, welches von einer dritten Feder 63 in Eingriff mit der Verzahnung 64 gelangt, wenn die dritte Steuerscheibe 34 diese Verschiebung erlaubt. Das kleine Sonnenrad 16 und das große Sonnenrad 17 sind jeweils drehbar um die Nabenachse 2 angeordnet, sind aber axial festgelegt. Die wechselweise Schaltung innerhalb des zweiten Planetengetriebes geschieht durch Festsetzen jeweils eines der beiden Sonnenräder 16 oder 17, was durch eine Steuerhülse 35 geschieht, welche mit der Nabenachse 2 drehfest aber axial verschiebbar verbunden ist und eine Kupplungsverzahnung 65 aufweist, die einmal mit dem kleinen Sonnenrad 16 und einmal mit dem großen Sonnenrad 17 in Verbindung gebracht werden kann. Die Schaltung erfolgt jeweils gegen den Druck einer vierten Feder 66, welche über eine Schiebehülse 68 mit der Steuerhülse 35 in Druckkontakt steht. Eine fünfte Feder 67 läßt das kleine Sonnenrad 16 im Falle von Zahn-auf-Zahn- Stellung mit der Kupplungsverzahnung 65 das kleine Sonnenrad 16 solange ausweichen, bis die Zähne zum Eingriff gelangen können.

Der zweite Planetenradträger 11 ist über einen zweiten Rollenfreilauf 37 mit einem zweiten Rollenkäfig 53 mit der Nabenhülse 1 in Fahrtrichtung ebenso wie das Hohlrad 19 über einen ersten Rollenfreilauf 36 kuppelbar.

Die Rücktrittbremseinrichtung der Mehrgang-Antriebsnabe umfaßt einen Bremsrollenfreilauf 38, der über ein erstes Profil 47 mit dem Antreiber 4 verbunden ist und einen dritten Rollenkäfig 44 aufweist, der mit einem Bremshebel 41 in Friktionsverbindung steht. Der Bremsrollenfreilauf 38 wirkt beim Rückwärtstreten über das erste Profil 47 auf einen Bremsmantel 39, welcher mindestens einmal in Mantellinienrichtung geschlitzt ist und von einer Feder zusammengehalten wird. Der Bremsmantel 39 ist mit dem Bremshebel 41 über mindestens eine Mitnahmefläche 40 verbunden, wodurch im Falle von auftretenden Umfangskräften diese über den Bremshebel 41 an den Rahmenbau des Fahrrades weitergeleitet werden, wenn der Bremshebel 41 mit dem Rahmenbau verbunden ist.

Die Steuerung des Steuerrohres 27 erfolgt von außerhalb über eine Zahnstange 51, welche mit dem Betätigungsorgan in Verbindung steht, welches vom Fahrradfahrer bedient werden kann. Die Zahnstange ist in einem achsfesten Gehäuse 70 verschiebbar angeordnet und greift mit der auf ihr angeordneten Geradeverzahnung in die Verzahnung einer Zahnradstange 25 ein und kann diese verdrehen, wenn die Zahnstange 51 durch das Betätigungsorgan hin- und hergeschoben wird. Die Zahnradstange 25 ist in einer Zentralbohrung der Nabenachse 2 angeordnet und gelagert. Die Zahnradstange 25 besteht vorzugsweise aus einer Profilstange mit dem gewünschten Zahnradprofil, welches auch mindestens ein in der Nabenachse 2 eingelassenes Zahnrad 26 aufweist. Eine Innenverzahnung mit dem gleichen Profil im Steuerrohr 27 sorgt für ständigen Eingriff zwischen Zahnradstange 25, Zahnrad 26 und Steuerrohr 27, wenn das Zahnrad 26 beidseitig koaxiale Achsstummel aufweist, die in Taschen 50 in der Nabenachse 2 gelagert sind. Die Übersetzung des Steuergetriebes, bestehend aus Zahnstange 51, Zahnradstange 25, Zahnrad 26 und Steuerrrohr 27, beinhaltet eine Übersetzung von etwa 3:1, ausgehend von der Zahnstange 51 zum Steuerrohr 27 hin ins Langsame, was den Vorteil der leichten Bedienbarkeit und der direkten Koppelung der Zahnstange mit dem Bestätigungsorgan mit sich bringt. Das derart von außen verdrehbare Steuerrohr 27 weist an seinem Umfang mehrere Ringnuten auf, von denen jeweils eine Nutflanke in Kurvenform gefräst ist. So liegen die erste Steuerscheibe 32 an einer ersten Steuerkurve 28, die zweite Steuerscheibe 33 an einer zweiten Steuerkurve 29 und die dritte Steuerscheibe 34 an einer dritten Steuerkurve 30 an. An der Endseite des Steuerrohres 27 ist eine vierte Steuerkurve 31 angeordnet, die mit der Steuerhülse 35 zusammenwirkt, nachdem diese durch Federdruck der vierten Feder 66 angedrückt wird.

Zur Funktion des ersten Rollfreilaufs 36 ist zu sagen, daß auf dem Außendurchmesser des Hohlrades 19 ein zweites Profil 62 angeordnet ist, das gegenüber dem Außendurchmesser verlaufende, sich im Durchmesser vergrößernde Steigflächen aufweist, von denen je eine einer Rolle zugeordnet ist, was bei einer Rollenzahl von beispielsweise fünf ein pentagonales Profil 62 ergibt. Der erste Rollenkäfig 52 muß, wenn eine Berührung der Rollen am Innendurchmesser der Nabenhülse 1 stattfinden soll, durch eine Friktion mit einem langsamer drehenden Teil den Rollen einen Widerstand gegen die Mitnahme des innenliegenden Teiles mit einem Profil entgegensetzen, wodurch die Steigflächen des zweiten Profils 62 sich unter die Rollen schieben und diese gegen die Nabenhülse 1 anpressen, wodurch eine schlupflose Mitnahme der Nabenhülse 1 erfolgt. Der erste Rollenkäfig 52 erfährt im Falle der Verschiebung der zweiten Steuerscheibe 33 gegen die zweite Schaltscheibe 57 eine Friktion gegenüber der zweiten Schaltscheibe 57, hervorgerufen durch die zweite Feder 60: Der Rollenkäfig 52 bleibt in der Drehzahl zurück und ermöglicht den Rollen die Rückwärtsbewegung auf die Stelgflächen bis zur Anlage am Innendurchmesser der Nabenhülse 1; die Verkeilung der Nabenhülse 1 mit dem Hohlrad 19 hat stattgefunden. Läßt der Antrieb nach oder überholt die Nabenhülse 1 das Hohlrad 19, so löst sich der Verband sofort. Gleiche Verhältnisse herrschen im zweiten Rollenfreilauf 37, wo ein drittes Profil 69 am Außendurchmesser des zweiten Planetenradträgers 11 angeordnet ist.

Beim Bremsrollenfreilauf 38 unterscheiden sich die Verhältnisse in der Drehrichtung und im anzutreibenden Teil, hier dem Bremsmantel 39. Dieser besteht vorzugsweise aus zwei Halbschalen, die sich, wie bereits erwähnt, aufspreizen und so gegen den Innendurchmesser der Nabenhülse 1 anpressen lassen. Der Bremshebel 41 gleitet beim Antrieb ständig auf dem Antreiber 4, weshalb hier eine Lagerschalter 43 für verlustarme Gleitbedingungen sorgt. Mit dem Bremshebel 41 ist ein Staubdeckel 42 verbunden, der das Eindringen von Schmutz in die Nabe und das Austreten von Schmiermittel aus der Nabe verhindern soll.

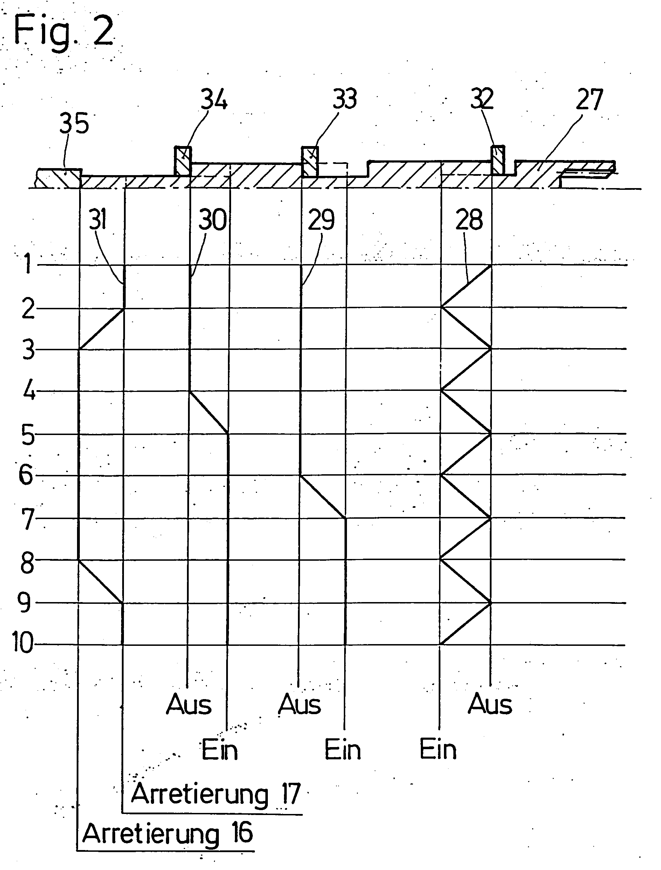

Was die Schaltfolge und deren Steuerung innerhalb des Planetengetriebes betrifft, so sind gemäß Fig. 2 die axialen Wege der ersten Steuerscheibe 32, der zweiten Steuerscheibe 33 und der dritten Steuerscheibe 34 sowie der Steuerhülse 35 dargestellt, was unschwer erkennen läßt, daß der Gesamtweg eines jeden der Elemente jeweils nur einen Schritt darstellt, der entweder nur einmal in einer Richtung oder aber in beiden Richtungen durchmessen wird. Wird die erste Steuerscheibe 32 bei jedem Schaltvorgang bewegt, so wird die zweite Steuerscheibe 33 und die dritte Steuerscheibe 34 bei einem gesamten Schaltzyklus nur einmal und die Steuerhülse 35 nur zweimal bewegt.

Um die zehn Gänge der Nabe in Antriebsrichtung zu schalten , sind insgesamt sieben Kupplungen nötig - vom Bremsrollenfreilauf 38 einmal abgesehen -, von denen mindestens drei schaltbar sein müssen. Es handelt sich um den ersten Rollenfreilauf 36 und den zweiten Rollenfreilauf 37, von denen der erste Rollenfreilauf 36 schaltbar ist. Ferner sind das erste Klinkengesperre 21, das zweite Klinkengesperre 22, das dritte Klinkengesperre 23 und das vierte Klinkengesperre 24 beteiligt, von denen das zweite Klinkengesperre 22 und das vierte Klinkengesperre 24 zu- bzw. abschaltbar sind. Schließlich gehört als siebte Kupplung, die als schaltbare Kupplung ausgeführt ist, die Kupplungsverzahnung 65 dazu, welche einmal das große Sonnenrad 17 und einmal das kleine Sonnenrad 16 drehfest mit der Nabenachse 2 koppelt.

Die Mehrgang-Antriebsnabe gemäß Fig. 1 ist in der ersten Gangstufe mit der größten Berggang-Stufe dargestellt. Gemäß Fig. 2 sind die Steuerkurven 28,29,30 und 31 als Abwicklung dargestellt und ihre Zuordnung zu den einzelnen Gangstufen tabellarisch aufgezeichnet. Es wird der Verlauf der Positionen der ersten Steuerscheibe 32, der zweiten Steuerscheibe 33, der dritten Steuerscheibe 34 sowie der Steuerhülse 35 in ihrer jeweiligen Lage dargestellt. Der Kraftfluß in der ersten Gangstufe verläuft zur Nabenhülse 1 wie folgt: Antreiber 4, Planetenrad 12, erster Planetenradträger 10, erstes Klinkengesperre 21, Hülse 55, zweiter Ring 58, drittes Gesperre 23, Hohlrad 19, Doppelplanetenrad 13 mit großem Sonnenrad 17, zweiter Planetenradträger 11, Rollenfreilauf 37, Nabenhülse 1. Der erste Rollenfreilauf 36, das zweite Klinkengesperre 22 sowie das vierte Klinkengesperre 24 bleiben ausgeschaltet.

Die zweite Gangstufe wird durch Zuschalten des zweiten Klinkengesperres 22 erreicht, wodurch die Hülse 55 über den ersten Ring 54 direkt, also nicht mehr untersetzt, angetrieben wird.

Zur Erreichung der dritten Gangstufe wird anstelle des großen Sonnenrades 17 das kleine Sonnenrad 16 mittels der Kupplungsverzahnung 65 festgesetzt; außerdem wird das zweite Klinkengesperre 22 außer Eingriff gebracht. Folgender Kraftfluß entsteht: Antreiber 4, Planetenrad 12, erster Planetenradteräger 10, erstes Klinkengesperre 21, Hülse 55, zweiter Ring 58, drittes Gesperre 23, Hohlrad 19, Doppelplanetenrad 13 mit kleinen Sonnenrad 16, zweiter Planetenradträger 11, Rollenfreilauf 37, Nabenhülse 1.

Die vierte Gangstufe wird analog zur zweiten Gangstufe mit der Zuschaltung des zweiten Klinkengesperres 22 erreicht.

Zur Erreichung der fünften Gangstufe, die hinsichtlich des zweiten Planetengetriebes einen Direktgang darstellt, wird das vierte Klinkengesperre 24 mit dem zweiten Plantenradträger 11 in Eingriff gebracht. In dieser Stellung überholt das Hohlrad 19 über das dritte Klinkengesperre 23 den dritten Ring 61. Außerdem wird das zweite Klinkengesperre 22 außer Eingriff gebracht. Folgender Kraftfluß entsteht: Antreiber 4, Planetenrad 12, erster Planetenradträger 10, erstes Klinkengesperre 21, Hülse 55, zweiter Ring 58, dritter Ring 61, viertes Klinkengesperre 24, zweiter Planetenradträger 11, Rollenfreilauf 37, Nabenhülse 1.

Die sechste Gangstufe wird analog zur vierten Gangstufe mit der Zuschaltung des zweiten Klinkengesperres 22 erreicht.

Zur Erreichung der siebten Gangstufe wird der erste Rollenfreilauf 36 zugeschaltet. Dies bedeutet, daß das Hohlrad 19 über das zweite Planetengetriebe ins Schnelle angetrieben wird, wodurch das dritte Klinkengesperre 23 überholt wird. Außerdem wird das zweite Klinkengesperre 22 außer Eingriff gebracht. Folgender Kraftschluß entsteht: Antreiber 4, Planetenrad 12, erster Planetenradträger 10, erstes Klinkengesperre 21, Hülse 55, zweiter Ring 58, dritter Ring 61, viertes Klinkengesperre 24, zweiter Planetenradträger 11, Doppelplanetenrad 13 mit kleinem Sonnenrad 16, Hohlrad 19, erstes Rollenfreilauf 36, Nabenhülse 1.

Die achte Gangstufe wird analog zur sechsten Gangstufe mit der Zuschaltung des zweiten Klinkengesperres 22 erreicht.

Zur Erreichung der neuten Gangstufe wird anstelle des kleinen Sonnenrades 16 das große Sonnenrad 17 mittels der Kupplungsverzahnung 65 festgesetzt; außerdem wird das zweite Klinkengesperre 22 außer Eingriff gebracht. Folgender Kraftfluß entsteht: Antreiber 4, Planetenrad 12, erster Planetenradträger 10, erstes Klinkengesperre 21, Hülse 55, zweiter Ring 58, dritter Ring 61, viertes Klinkengesperre 24, zweiter Planetenradträger 11, Doppelplanetenrad 13 mit großem Sonnenrad 17, Hohlrad 19, erster Rollenfreilauf 36, Nabenhülse 1.

Die zehnte Gangstufe schließlich wird analog zur achten Gangstufe mit der Zuschaltung des zweiten Klinkengesperres 22 erreicht.

## Patentansprüche

1. Mehrgang-Antriebsnabe mit mehr als 3 Gängen für ein Fahrrad, umfassend
* eine Nabenachse (2),
* einen zur Nabenachse (2) koaxialen, relativ zur dieser sowie relativ zur Nabenhülse (1) drehbaren Antreiber (4)
* eine Planetengetriebeanordnung (45,18,12;46,13,16,17) mit mehr als 3 wahlweise in einen Antriebsweg zwischen den Antreiber (4) und die Nabenhülse (1) schaltbaren Getriebestufen,
* wahlweise schaltbare Kupplungseinrichtungen (21,22,23,24,36,37) im Antriebsweg der Getriebestufen,
* mindestens eine die Nabenachse umgebende Steuerhülse (27,35,48)
gekennzeichnet durch
* eine Steuereinrichtung zur Betätigung der schaltbaren Getriebestufen durch das Zentrum der Nabenachse (1) von außerhalb, wobei
* die Steuerbewegung durch Drehung einer Zahnradstange (25) über Zahnräder (26) an ein Steuerrohr (27) oder Steuerhülsen (35,48) weitergegeben wird.

2. Mehrgang-Antriebsnabe nach Anspruch 1, dadurch gekennnzeichnet, daß die Zahnradstange (25) durch eine in einem achsfesten Gehäuse (70) angeordnete, verschiebbare Zahnstange (51) verdrehbar ist.

3. Mehrgang-Antriebsnabe nach Abspruch 1 oder 2, dadurch gekennzeichnet, daß um die Nabenachse (2) herum das Steuerrohr (27) drehbar angeordnet ist, welches an seiner äußeren Zylinderfläche Kurven (28,29,30,31) aufweist, die bei schrittweiser Drehung des Steuerrohres (27) Steuerelemente (32,33,34,35) axial bewegen kann, welche axial verschiebbar, aber nicht drehbar um die Nabenachse (2) angeordnet sind.

4. Mehrgang-Antriebsnabe nach einem der Ansprüche 1 bis 3, dadurch gekennzeichnet, daß die Zahnräder (26) an beiden Endseiten Achsstummel aufweisen, die in Taschen (50) liegen, welche gegenüberliegend in Durchbrüchen der Nabenachse (2) angeordnet sind, wobei die Breite der Taschen (50) dem Durchmesser des jeweiligen Achsstummels zuzüglich eines Bewegungsspiel entspricht.

5. Mehrgang-Antriebsnabe nach einem der Ansprüche 1 bis 4, dadurch gekennzeichnet, daß die Verzahnungen der Zahnräder (26) und der Zahnradstange (25) identisch sind.

## Claims

1. Multi-speed hub for cycles with more than three speeds, comprising
* a spindle (2),
* a driver (4) coaxial with the spindle (2) and rotatable relative to it as well as relative to the housing (1)
* a planetary gearing assembly (45, 18, 12;46, 13 16, 17) with more than three gear ratios which can be selected at will in a drive path between the driver (4) and the housing (1)
* clutch devices (21, 22, 23, 24, 36, 37) which can be selected at will in the drive path of the gearing stages,
* at least one control sleeve (27, 35, 48) around the spindle
characterised by
* a control device for actuating the shiftable gear stages from outside through the centre of the spindle (1),
* the control movement being transmitted by rotation of a gear wheel rod (25) through pinions (26) to a control tube (27) or control sleeves (35, 48).

2. Multi-speed hub according to claim 1, characterised in that the gear wheel rod (25) is rotatable by a rack member (51) arranged slidably in an axially fixed housing (70).

3. Multi-speed hub according to claim 1 or 2,
characterised in that the control tube is arranged to be rotatable about the spindle (2) and has external cylindrically surfaced cams (28, 29, 30, 31) which on stepwise rotation of the control tube (27) can axially move control elements (32, 33, 34, 35) which are arranged to be axially displaceable but not rotatable about the spindle (2).

4. Multi-speed hub according to one of claims 1 to 3, characterised in that the pinions (26) have trunnions or stub axles at each end lying in pockets (50) which are arranged opposite one another in recesses in the spindle (2), the width of the pockets (50) corresponding to the diameter of the respective trunnions or stub axles with the addition of some clearance.

5. Multi-speed hub according to one of claims 1 to 4, characterised in that the teeth on the pinions (26) and on the rack member (25) are identical.

## Revendications

1. Moyeu d'entraînement multivitesse avec plus de trois vitesses pour une bicyclette, comprenant:
- un axe du moyeu (2),
- un dispositif d'entraînement (4) coaxial à l'axe du moyeu (2), pivotant par rapport à celui-ci, et par rapport au corps de moyeu (1),
- un système à engrenage planétaire (45, 18, 12; 46, 13, 16, 17) avec plus de trois niveaux d'entraînement à sélectionner facultativement dans une voie d'entraînement entre le dispositif d'entraînement (4) et le corps de moyeu (1),
- des dispositifs d'accouplement (21, 22, 23, 24, 36, 37) à sélectionner facultativement dans la voie d'entraînement des niveaux d'entraînement
- au moins un manchon de direction (27, 35, 48) entourant l'axe du moyeu
caractérisé par
- un dispositif de direction destiné à actionner de l'extérieur les niveaux d'entraînement disponibles pour changer de vitesse par le centre de l'axe du moyeu (1), auquel cas
- le mouvement de direction est transmis à un tube de direction (27) ou aux manchons de direction (35, 48) au moyen des pignons (26) par rotation d'une tige (25).

2. Moyeu d'entraînement selon la revendication 1, caractérisé en ce que la tige (25) peut être tournée par une crémaillère déplaçable, disposée dans un carter (70) fixé par rapport à l'axe.

3. Moyeu d'entraînement multivitesse selon la revendication 1 ou 2, caractérisé en ce que le tube de direction (27) est disposé à pouvoir pivoter autour de l'axe du moyeu (2) qui présente des courbes (28, 29, 30, 31) au niveau de sa surface cylindrique externe, pouvant bouger, en tournant progressivement le tube de direction (27), les éléments de direction (32, 33, 34, 35) axialement, qui sont disposés de façon à pouvoir être déplacés dans un mouvement axial, sans tourner autour de l'axe du moyeu (2).

4. Moyeu d'entraînement multivitesse selon l'une des revendications 1 à 3, caractérisé en ce que les pignons (26) présentent des bouts d'axe aux deux extrémités, qui se trouvent dans des poches (50) disposées en face dans les ouvertures de l'axe du moyeu (2), auquel cas la largeur des poches (50) correspond au diamètre du bout d'axe considéré plus un jeu pour le mouvement.

5. Moyeu d'entraînement multivitesse selon l'une des revendications 1 à 4, caractérisé en ce que les dentures des pignons (26) et de la tige (25) sont identiques.
